# EUROPÄISCHE PATENTSCHRIFT

(11) **EP 0 624 487 B1**
(45) Veröffentlichungstag und Bekanntmachung des Hinweises auf die Patenterteilung: **20.11.1996**
(21) Anmeldenummer: 94104546.0
(22) Anmeldetag: 23.03.1994
(51) Int. Cl.: B60J 5/06, E05D 15/10, B61D 19/02

(54) **Ausschwenkbare Schiebetür für Fahrzeuge, insbesondere Fahrzeuge des öffentlichen Personenverkehrs**
Swinging and sliding door for vehicles, particularly for public transport vehicles
Porte coulissante pivotante pour véhicule, en particulier pour véhicule de transport en commun

(30) Priorität: 11.05.1993 DE 4315616
(43) Veröffentlichungstag der Anmeldung: 17.11.1994
(73) Patentinhaber: GEBRÜDER BODE & CO. GMBH, D-34123 Kassel (DE)
(72) Erfinder: Horn, Manfred, D-34260 Kaufungen (DE)
(74) Vertreter: Feder, Wolf-Dietrich, Dr. Dipl.-Phys.

(56) Entgegenhaltungen:
- WO-A-83/01084

## Beschreibung

Die Erfindung betrifft eine ausschwenkbare Schiebetür für Fahrzeuge, insbesondere Fahrzeuge des öffentlichen Personenverkehrs, mit den Merkmalen aus dem Oberbegriff des Patentanspruchs 1.

Eine ausschwenkbare Schiebetür für Fahrzeuge mit diesen Merkmalen ist in der nicht vorveröffentlichten europäischen Patentanmeldung Nr. 93 112 099.2 (Veröffentlichungs-Nr. 0 589 180) mit älterem Zeitrang beschrieben.

Die Erfindung bezweckt eine Verbesserung und weitere Ausbildung der Erfindung gemäß der älteren Anmeldung.

Die der Erfindung zugrunde liegende Aufgabe bestand darin, bei einer ausschwenkbaren Schiebetür nach der älteren Anmeldung die beiden Bewegungsschritte mit konstruktiv einfachen Mitteln derart auszurichten,daß der Türflügel in der geöffneten Stellung um einen vorgegebenen Betrag in der Vertikalen angehoben ist. Dieser Aufgabestellung liegt das Problem zugrunde, daß bei Fahrzeugen des öffentlichen Personenverkehrs, insbesondere Autobussen, das Fahrzeug an Haltestellen dicht an die Bordsteinkante heranfahren muß. Andererseits sind bei modernen Bussen die Einstiege tief angesetzt, um das Einsteigen zu erleichtern. Es muß deswegen dafür Sorge getragen werden, daß der Türflügel in dem ersten Bewegungsschritt, mit dem er aus der Türöffnung herausgeführt wird, nicht in Kollision mit der Bordsteinkante gerät.

Die Lösung der obengenannten Aufgabe erfolgt erfindungsgemäß mit den Merkmalen aus dem kennzeichnenden Teil des Patentanspruchs 1.

Vorteilhafte Weiterbildungen der Erfindung sind in den Unteransprüchen beschrieben.

Der Stand der Technik geht beispielsweise aus WO-A-83 01 084 hervor.

Der Grundgedanke der Erfindung besteht darin, die Anlenkung und Führung des Türflügels so auszubilden, daß die Bewegungsrichtung des ersten Bewegungsschrittes zwar weiterhin ausschließlich senkrecht zur Verschiebungsrichtung des zweiten Bewegungsschrittes liegt, aber nicht notwendig in horizontaler Richtung erfolgen muß. Wie weiter unten an Hand eines Ausführungsbeispiels ausführlich erläutert, ist vielmehr vorgesehen, daß die Richtung des ersten Bewegungsschrittes aus zwei Teilbewegungen zusammengesetzt ist, von denen eine in horizontaler Richtung nach außen und die andere in vertikaler Richtung nach oben verläuft. Die Zusammensetzung dieser beiden Bewegungen ergeben eine Richtung des ersten Bewegungsschrittes der Öffnungsbewegung,die schräg nach oben verläuft. Der Türflügel wird also nicht nur nach außen, sondern gleichzeitig um einen vorgegebenen Betrag nach oben versetzt, so daß er nicht in Kollision mit einer eventuellen Bordkante geraten kann.

Zum Antrieb des Türflügels können in beiden Bewegungsschritten Elektromotoren dienen, wobei der erste Bewegungsschritt durch zwei gleichzeitig ansteuerbare Elektromotoren bewirkt werden kann.

Im folgenden wird an Hand der beigefügten Zeichnungen ein Ausführungsbeispiel für eine Schiebetür nach der Erfindung näher erläutert.

In den Zeichnungen zeigen:
Fig. 1 in stark schematisierter Darstellung eine Ansicht einer ausschwenkbaren Schiebetür von außen;
Fig. 2 und 3 ebenfalls stark schematisiert vertikale Querschnitte durch die Schiebetür nach Fig. 1 im geschlossenen bzw. geöffneten Zustand;
Fig. 4 in einem stärker vergrößerten vertikalen Querschnitt Halterung und Rollenführung der Schiebetür nach den Fig. 1 bis 3 im geöffneten Zustand.

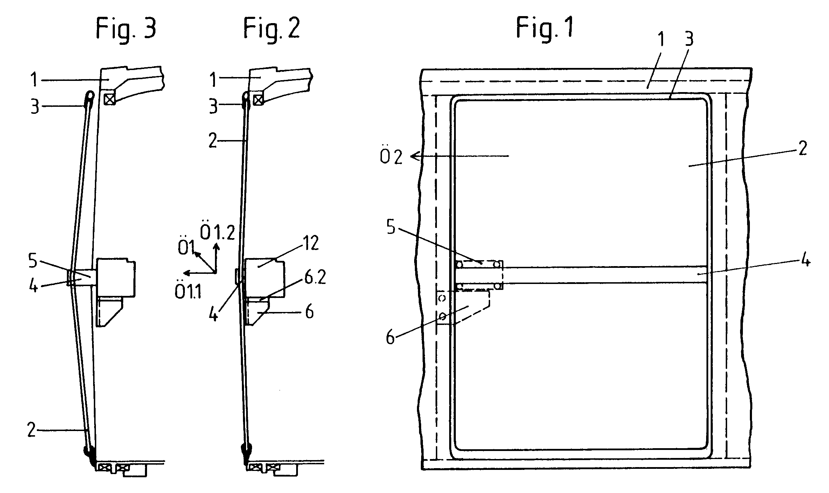

Die in den Zeichnungen dargestellte ausschwenkbare Schiebetür kann in nicht eigens dargestellter Weise, beispielsweise in einer Öffnung der Seitenwand eines Autobusses angeordnet sein. In Fig. 1 erkennt man den Türrahmen 1 sowie einen Türflügel 2 mit einer umlaufenden Dichtung 3, der an seiner Innenseite im Bereich der horizontalen Mitte mit einer horizontal verlaufenden Laufschiene 4 versehen ist. In die Laufschiene 4 greift eine in den Fig. 1 bis 3 nur angedeutete Rollenführung 5 ein, die innerhalb eines in Fig. 2 und 3 mit 12 bezeichneten Gehäuses angeordnet ist und in einer Halterung (6) verschiebbar gelagert ist, welche an dem einen in Fig. 1 linken Seitenpfosten des Türrahmens 1 befestigt ist. Die Schiebetür ist als außenlaufende Schiebetür ausgebildet. Wie in Fig. 1 und 2 angedeutet, erfolgt die Öffnungsbewegung, indem zunächst der Türflügel 2 in Richtung Ö1 nach außen und gleichzeitig schräg nach oben versetzt wird und sodann in Richtung Ö2 seitlich an der Außenwand des Fahrzeugs entlang verschoben wird. Die Schließbewegung erfolgt in umgekehrter Reihenfolge. Der erste Bewegungsschritt der Öffnungsbewegung in Richtung Ö1 setzt sich aus zwei Bewegungen zusammen, von denen eine in Richtung Ö1.1 horizontal nach außen und die andere Richtung Ö1.2 vertikal nach oben erfolgt. Aus der Bewegungsstrecke in den beiden Teilrichtungen Ö1.1 und Ö1.2 ergibt sich auch der Winkel, unter dem der Türflügel 2 schräg nach oben angehoben wird. Sind die beiden Bewegungsstrecken in Richtung Ö1.1 und in Richtung Ö1.2 gleich groß, so erfolgt ein Anheben des Türflügels unter einem Winkel von 45° schräg nach oben.

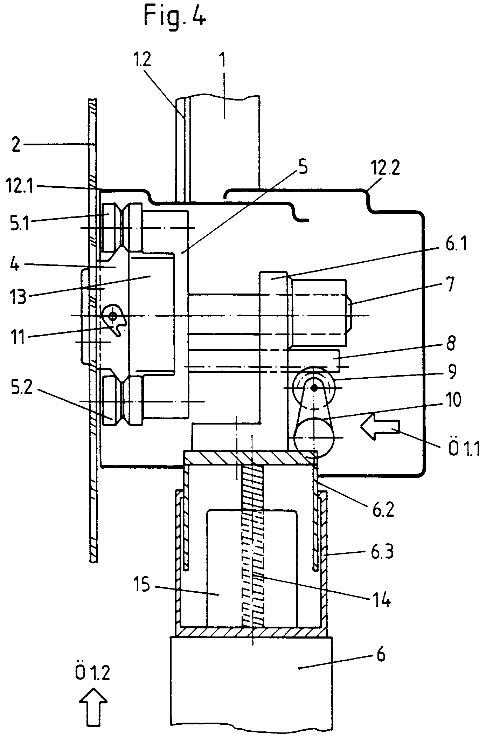

In Fig. 4 sind die Rollenführung für den Türflügel und ihre Halterung genauer dargestellt. In die an der Innenseite des Türflügels 2 angeordnete Laufschiene greifen an ihrer Oberseite und Unterseite jeweils Laufrollenpaare 5.1 und 5.2 ein, die an einem im Querschnitt U-förmig ausgebildeten Rollenführungsteil 5 befestigt sind, welches über ein Paar von horizontal nebeneinander angeordneten Führungsstangen 7 (in Fig. 4 ist nur eine von ihnen sichtbar) in einem im Querschnitt L-förmig geformten Halterungsteil 6.1 geführt sind. Das Halterungsteil 6.1 sitzt auf einer Zwischenhalterung 6.2, welche sich über eine Hubspindel 14 auf der eigentlichen Halterung 6 abstützt, die mit dem Türrahmen fest verbunden ist. Der Bewegungsantrieb in Richtung des ersten Bewegungsschrittes Ö1 erfolgt einerseits mittels eines mit der Zwischenhalterung 6.2 fest verbundenen Elektromotors 10, der ein Zahnrad 9 antreibt, das in ein mit dem Rollenführungsteil 5 fest verbundenes Ritzel 8 eingreift und andererseits mittels eines mit der festen Halterung 6 verbundenen Elektromotors 15, der die Hubspindel 14 antreibt.

Der Bewegungsantrieb in Richtung des zweiten Bewegungsschrittes Ö2 erfolgt über einen berührungslosen Linearmotor 13, der innerhalb des Rollenführungsteils 5 der Laufschiene 4 gegenüberliegend angeordnet ist und diese direkt antreibt.

An der einen Stirnfläche der Laufschiene 4 ist ein Verriegelungselement 11, das als Drehfalle ausgebildet ist, zu erkennen, welches im geschlossenen Zustand in ein am Türrahmen 1 angeordnetes Gegenelement eingreift. An der in Fig. 4 nicht sichtbaren Stirnfläche kann ein entsprechendes Verriegelungselement angeordnet sein.

Die Rollenführung 5 und die Antriebsmittel sind wie aus Fig. 4 ersichtlich, innerhalb eines zweiteiligen Gehäuses angeordnet, dessen einer Teil 12.1 zusammen mit dem Türflügel 2 und der Rollenführung 5 bewegbar ist, während der andere Teil 12.2 fest mit der Zwischenhalterung 6.2 verbunden ist.

Wie aus den Fig. 2 und 3 ersichtlich, steht der elastisch ausgebildete Türflügel 2 unter einer Vorspannung welche bewirkt, daß in dem in Fig. 3 dargestellten geöffneten Zustand die umlaufenden Seitenkanten des Türflügels 2 gegenüber dem mittleren Bereich nach innen in Richtung auf den Türrahmen 1 hin versetzt sind. Beim Schließen der Tür nach dem Aufsetzen der Seitenkanten des Türflügels auf die Gegenflächen am Türrahmen 1 wird der Türflügel 2 gegen die Wirkung der elastischen Kraft weiter nach innen gezogen, so daß die Seitenkanten über die umlaufende Dichtung 3 fest auf die Gegenflächen am Türrahmen 1 aufgepreßt werden, so daß der Türflügel 2 an allen vier Seitenkanten dicht an den Gegenflächen des Türrahmens 1 anliegt.

## Patentansprüche

1. Ausschwenkbare Schiebetür für Fahrzeuge, insbesondere Fahrzeuge des öffentlichen Personenverkehrs, mit einem in einer Öffnung der Seitenwand des Fahrzeugaufbaus angeordneten Türrahmen (1) und einem an seinen Außenkanten mit einer umlaufenden Dichtung (3) versehenen Türflügel (2), der zum Öffnen der Tür zunächst in einem ersten Bewegungsschritt (Ö1.1) aus der Schließstellung in eine Verschiebungsstellung versetzt und dann in einem zweiten Bewegungsschritt (Ö2) in horizontaler Richtung seitlich in die Öffnungsstellung verschoben wird, wobei die Bewegungsrichtung des ersten Bewegungsschrittes (Ö1.1) ausschließlich senkrecht zur Verschiebungsrichtung des zweiten Bewegungsschrittes liegt und bei der an der Innenseite des Türflügels (2) im wesentlichen im Bereich der horizontalen Mitte eine mit dem Türflügel (2) fest verbundene, horizontal verlaufende Laufschiene (4) angeordnet ist, in welche eine Rollenführung (5) eingreift, die innerhalb der Türöffnung in einem Bereich der der in Öffnungsrichtung liegenden vertikalen Seitenkante des Türrahmens (1) unmittelbar benachbart ist, auf der Höhe der Laufschiene (4) angeordnet und in einer Halterung (6) in Richtung des ersten Bewegungsschrittes verschiebbar gelagert ist, wobei die Halterung (6) fest mit dem Fahrzeugaufbau (1) verbunden ist und der in Richtung des ersten Bewegungsschrittes (Ö1.1) mindestens teilweise elastisch ausgebildete Türflügel (2) derart vorgespannt ist, daß beim Aufsetzen der mit der umlaufenden Dichtung (3) versehenen Seitenkanten des Türflügels (2) auf die Gegenflächen des Türrahmens (1) der mittlere Bereich des Türflügels (2) entgegen der elastischen Vorspannkraft und unter Verformung um eine vorgegebene Strecke in Schließrichtung des ersten Bewegungsschrittes (Ö1.1) bewegbar ist, dadurch gekennzeichnet, daß die Rollenführung (5) in einer Zwischenhalterung (6.2) in Richtung des ersten Bewegungsschrittes (Ö1.1) verschiebbar gelagert ist und diese Zwischenhalterung (6.2) an der mit dem Fahrzeugaufbau festverbundenen Halterung (6) in einer Richtung (Ö1.2) verschiebbar gelagert ist, die senkrecht zur Richtung des ersten Bewegungsschrittes (Ö1.1) und senkrecht zur Richtung des zweiten Bewegungsschrittes (Ö2) liegt.

2. Schiebetür nach Anspruch 1 dadurch gekennzeichnet, daß sie als außenlaufende Schiebetür ausgebildet ist, wobei der erste Bewegungsschritt (Ö1) der Öffnungsbewegung nach außen erfolgt und durch die Vorspannung des Türflügels (2) im geöffneten Zustand der Tür die Seitenkanten des Türflügels (2) gegenüber dem mittleren Bereich nach innen versetzt sind.

3. Schiebetür nach Anspruch 1 oder 2 dadurch gekennzeichnet, daß die Zwischenhalterung (6.2) mit der Halterung (6) über eine von einem ersten Elektromotor (15) antreibbare Hubspindel (14) verbunden ist.

4. Schiebetür nach Anspruch 3 dadurch gekennzeichnet, daß der Türantrieb für die Bewegung des Türflügels (2) in Richtung des horizontalen Teils des ersten Bewegungsschrittes (Ö1.1) einen an der Zwischenhalterung (6.2) angeordneten zweiten Elektromotor (10) aufweist, der die in einer mit der Zwischenhalterung (6.2) verbundenen Führung (6.1-7) in horizontaler Richtung (Ö1.1) geführte Rollenführung (5) über ein Zahnstangengetriebe (8-9) antreibt.

5. Schiebetür nach Anspruch 4 dadurch gekennzeichnet, daß der erste und zweite Elektromotor (15, 10) gleichzeitig ansteuerbar sind.

6. Schiebetür nach einem der Ansprüche 1 bis 5 dadurch gekennzeichnet, daß die Halterung (6) an einem vertikalen Seitenpfosten des Türrahmens (1) befestigt ist.

7. Schiebetür nach einem der Ansprüche 1 bis 6 dadurch gekennzeichnet, daß der Türantrieb für die Bewegung des Türflügels (2) im zweiten Bewegungsschritt (Ö2) einen an der Rollenführung (5) angeordneten berührungslos arbeitenden elektrischen Linearmotor (13) aufweist, der direkt die Laufschiene (4) antreibt.

## Claims

1. Swing-out sliding door for vehicles, in particular for public transport vehicles, having a door frame (1) disposed in an opening in the side wall of the vehicle body and a door leaf (2), which is provided at its outer edges with a circumferential seal (3) and, for opening the door, in a first motional step (Ö1.1) is initially moved out of the closed position into a displacement position and then in a second motional step (Ö2) is displaced in a horizontal direction laterally into the open position, wherein the direction of movement of the first motional step (Ö1.1) is exclusively at right angles to the direction of displacement of the second motional step and wherein disposed at the inside of the door leaf (2) substantially in the region of the horizontal centre is a horizontally extending runner rail (4), which is firmly connected to the door leaf (2) and into which engages a roller guide (5), which is disposed inside the door opening in a region, which is immediately adjacent to the vertical side edge of the door frame (1) lying in opening direction, at the height of the runner rail (4) and is supported in a mounting (6) so as to be displaceable in the direction of the first motional step, wherein the mounting (6) is firmly connected to the vehicle body (1) and the door leaf (2), which is designed so as to be at least partially elastic in the direction of the first motional step (Ö1.1), is prestressed in such a way that, when the side edges of the door leaf (2) which are provided with the circumferential seal (3) are applied against the counter-surfaces of the door frame (1), the middle region of the door leaf (2) is movable counter to the elastic prestressing force and with simultaneous deformation a predetermined distance in the closing direction of the first motional step (Ö1.1), characterized in that the roller guide (5) is supported in an intermediate mounting (6.2) so as to be displaceable in the direction of the first motional step (Ö1.1) and said intermediate mounting (6.2) is supported on the mounting (6) firmly connected to the vehicle body so as to be displaceable in a direction (Ö1.2), which is at right angles to the direction of the first motional step (Ö1.1) and at right angles to the direction of the second motional step (Ö2).

2. Sliding door according to claim 1, characterized in that it takes the form of an externally operating sliding door, wherein the first motional step (Ö1) of the opening movement is effected in an outward direction and by virtue of the prestressing of the door leaf (2) in the open state of the door the side edges of the door leaf (2) are offset in an inward direction relative to the middle region.

3. Sliding door according to claim 1 or 2, characterized in that the intermediate mounting (6.2) is connected to the mounting (6) by a lifting spindle (14), which is drivable by a first electric motor (15).

4. Sliding door according to claim 3, characterized in that the door drive for moving the door leaf (2) in the direction of the horizontal part of the first motional step (Ö1.1) comprises a second electric motor (10), which is disposed on the intermediate mounting (6.2) and drives the roller guide (5), which is guided in a horizontal direction (Ö1.1) in a guide (6.1-7) connected to the intermediate mounting (6.2), by means of a rack-and-pinion gear (8-9).

5. Sliding door according to claim 4, characterized in that the first and second electric motors (15, 10) may be activated simultaneously.

6. Sliding door according to one of claims 1 to 5, characterized in that the mounting (6) is fastened to a vertical side post of the door frame (1).

7. Sliding door according to one of claims 1 to 6, characterized in that the door drive for moving the door leaf (2) in the second motional step (Ö2) comprises a contactless electric linear motor (13), which is disposed on the roller guide (5) and directly drives the runner rail (4).

## Revendications

1. Porte coulissante pivotante pour véhicules, en particulier pour véhicules de transport en commun, comprenant un cadre de porte (1) disposé dans une ouverture aménagée dans la cloison latérale de la superstructure du véhicule et un vantail (2) muni d'un joint d'étanchéité (3) appliqué sur le pourtour des bords extérieurs, ledit vantail étant déplacé, pour ouvrir la porte, de la position fermée dans une position décalée dans une première phase de mouvement Ö1.1), puis glissé, dans une deuxième phase de mouvement (Ö2), latéralement dans le sens horizontal jusqu'à la position ouverte, la direction du mouvement de la première phase (Ö1.1) étant exclusivement perpendiculaire par rapport au sens de glissement de la deuxième phase de mouvement, la porte comprenant une glissière (4) orientée dans le sens horizontal et reliée de manière solidaire au vantail (2) dans la zone sensiblement centrale vue dans le sens horizontal, un guidage à galets (5) étant installé à l'intérieur de la glissière (4) et ce, à l'intérieur de l'ouverture de la porte, dans une zone directement voisine du bord latéral vertical du cadre de porte (1), vu dans le sens de l'ouverture, ledit guidage à galets pouvant être déplacé dans une fixation (6) dans la direction de la première phase de mouvement, ladite fixation étant reliée de manière solidaire à la superstructure (1) du véhicule et le vantail de conception au moins partiellement élastique dans le sens du déplacement de la première phase de mouvement (Ö1.1) étant précontraint de façon à pouvoir déplacer la zone centrale du vantail (2), lors de l'appui des bords latéraux du vantail (2) muni d'un joint d'étanchéité (3) sur tout le pourtour sur les surfaces d'appui du cadre de porte, suite à la force de précontrainte élastique du vantail (2) et en se déformant, sur une distance préalablement définie dans le sens de fermeture de la première phase de mouvement (Ö1.1), **caractérisée en ce que** le guidage à galets (5) repose de manière mobile dans une fixation intermédiaire (6.2) de façon à pouvoir se décaler dans le sens de la première phase de mouvement (Ö1.1) et en ce que cette fixation intermédiaire (6.2) est posée de manière mobile dans une fixation principale (6) montée de manière solidaire sur la superstructure du véhicule de façon à pouvoir glisser dans une direction perpendiculaire (Ö1.2) par rapport à la direction de la première phase de mouvement (Ö1.1), d'une part, et perpendiculaire par rapport à la direction de la deuxième phase de mouvement, d'autre part (Ö2).

2. Porte coulissante selon la revendication 1, caractérisée en ce qu'elle est du type porte coulissante extérieure, la première phase de mouvement (Ö1) du mouvement (du mouvement d'ouverture s'effectuant vers l'extérieur) et les bords latéraux du vantail (2) étant décalés vers l'intérieur par rapport à la zone centrale suite à la précontrainte du vantail (2) en position ouverte.

3. Porte coulissante selon la revendication 1 ou 2, caractérisée en ce que la fixation intermédiaire (6.2) est reliée à la fixation principale (6) par une vis de levage (14) entraînée par un premier moteur électrique (15).

4. Porte coulissante selon la revendication 3, caractérisée en ce que le mouvement d'entraînement du vantail (2) dans le sens de la partie horizontale de la première phase de mouvement (Ö1.1) est assuré par un deuxième moteur électrique (10) monté sur la fixation intermédiaire (6.2), ledit moteur entraînant le guidage à galets (5) guidé lui-même dans un guidage (6.1, 7) relié à la fixation intermédiaire (6.2) dans le sens horizontal (Ö1.1) par l'intermédiaire d'un engrenage a crémaillère (8,9).

5. Porte coulissante selon la revendication 4, caractérisée en ce que les premier et second moteurs électriques 15, 10) peuvent être commandés simultanément.

6. Porte coulissante selon l'une quelconque des revendications 1 à 5, caractérisée en ce que la fixation principale (6) est montée sur un montant vertical du cadre de porte (1).

7. Porte coulissante selon l'une quelconque des revendications 1 à 6, caractérisée en ce que le vantail (2) est déplacé, dans la deuxième phase de mouvement (Ö2), par un moteur linéaire électrique (13) fonctionnant sans contact et monté sur le guidage à galets (5), ledit moteur linéaire entraînant directement la glissière (4).
